# EUROPÄISCHE PATENTSCHRIFT

(11) **EP 3 573 290 B1**
(45) Veröffentlichungstag und Bekanntmachung des Hinweises auf die Patenterteilung: **11.08.2021**
(21) Anmeldenummer: 19174845.8
(22) Anmeldetag: 16.05.2019
(51) Int. Cl.: H04L 12/40, B60R 16/023

(54) **VERFAHREN ZUM BETREIBEN EINER SENSORANORDNUNG IN EINEM KRAFTFAHRZEUG AUF BASIS EINES DSI-PROTOKOLLS**
METHOD FOR OPERATING A SENSOR ARRANGEMENT IN A MOTOR VEHICLE ON THE BASIS OF A DSI PROTOCOL
PROCÉDÉ DE FONCTIONNEMENT D'UN DISPOSITIF CAPTEUR DANS UN VÉHICULE AUTOMOBILE À BASE D'UN PROTOCOLE DSI

(30) Priorität: 25.05.2018 DE 102018112587
(43) Veröffentlichungstag der Anmeldung: 27.11.2019
(73) Patentinhaber: Valeo Schalter und Sensoren GmbH, 74321 Bietigheim-Bissingen (DE)
(72) Erfinder: Hallek, Michael, 74321 Bietigheim-Bissingen (DE); Lewandowski, Marek, 74321 Bietigheim-Bissingen (DE)
(74) Vertreter: Enge, Sebastian

(56) Entgegenhaltungen:
- EP-A1- 2 455 832
- DE-A1-102006 032 726
- US-B1- 7 007 107

## Beschreibung

Die Erfindung betrifft ein Verfahren zum Betreiben einer Sensoranordnung in einem Kraftfahrzeug auf Basis eines DSI-Protokolls, wobei die Sensoranordnung eine Zentraleinheit als Master und eine Mehrzahl von Sensoreinheiten als von dem Master gesteuerte Slaves aufweist, die Zentraleinheit und die Sensoreinheiten an eine Busleitung angeschlossen sind und über die Busleitung eine Kommunikation zwischen der Zentraleinheit und den Sensoreinheiten erfolgt. Die Erfindung betrifft ferner die Verwendung eines solchen Verfahrens in einem Kraftfahrzeug, eine Sensoranordnung sowie ein Kraftfahrzeug mit einer solchen Sensoranordnung.

Im Automotive-Bereich können bei der Kommunikation mit Sensoren im Kraftfahrzeug der DSI3-Bus und das DSI-Protokoll Anwendung finden. Das DSI-Protokoll Distributed System Interface, siehe: DSI3 Bus Standard, Revision 1.00 vom 16. Februar 2011 ist ein Protokoll, das es gestattet, auf Basis einer einfachen Zweidraht-Verkabelung ein SensorNetzwerk aufzubauen, in dem ein Master mit einem oder mehreren Slaves über eine Busleitung kommuniziert. Das DSI-Protokoll richtet sich dabei primär auf die Verwendung in Kraftfahrzeugen, um mittels des Masters eine Mehrzahl von Slaves, insbesondere Sensoren und Aktoren, abzufragen und/oder anzusteuern.

Die Spezifikation des DSI-Protokolls sieht dabei vor, dass eine solche Sensoranordnung in einer von zwei Betriebsklassen betrieben werden kann, und zwar einerseits in der "Signal Function Class", andererseits in der "Power Function Class". Das Protokoll sieht weiterhin grundsätzlich drei unterschiedliche Typen der Nutzung des Busses zwischen dem Master und den Slaves vor:
Im CRM-Modus (Command and Response Modus) findet eine bidirektionale Kommunikation zwischen dem Master und den Slaves statt. Der Master sendet ein Kommando (Command), auf das die Slaves antworten (Response). Dieses Verfahren wird beispielsweise verwendet, um die Slaves zu konfigurieren oder um bestimmte Werte gezielt von einem Slave abzufragen.

Im PDCM-Modus (Periodic Data Collection Mode) übertragen die Slaves vergleichsweise große Datenmengen innerhalb eines vorgegebenen Zeitschlitzes an den Master, wobei die Sendetätigkeit des Masters sich darauf beschränkt, durch ein Synchronisierungssignal (Broadcast Read Command) den Slaves einen Bezugspunkt zur Bestimmung dieses Zeitschlitzes zur Verfügung zu stellen. Die Slaves sind bereits zuvor mit Informationen zu ihrem jeweiligen Zeitschlitz ausgestattet worden, so dass sie in Reaktion auf das Synchronisierungssignal ihr jeweiliges Sendezeitintervall bestimmen und auf Basis dessen ihre Sensordaten an den Master senden können.

In der Power-Phase findet die Übertragung von vergleichsweise großen Mengen elektrischer Energie statt, um die Slaves mit hohem Energiebedarf mit ausreichend Energie zu versorgen.

Die oben genannte Signal Function Class gemäß der oben genannten Spezifikation dient primär der Anbindung von Slaves mit geringem Energiebedarf und vergleichsweise hohem Datenaufkommen, das von dem Slave zum Master zu senden ist. Nach Inbetriebnahme einer Sensoranordnung der Signal Function Class findet zunächst eine Phase der Kommunikation im CRM-Modus zwischen dem Master und dem Slave statt, im Rahmen derer der Slave üblicherweise konfiguriert wird, beispielsweise in Hinblick auf die Parameter des oben genannten PDCM-Zeitschlitzes dieses Slaves. Ist diese Phase abgeschlossen, so geht die Sensoranordnung in den PCDM-Modus über, in dem immer in Reaktion auf das Synchronisierungssignal des Masters die Slaves die erfassten Daten im jeweils zugeordneten Zeitschlitz an die Zentralinstanz senden. Diese Phase im PDCM-Modus wird üblicherweise nicht mehr verlassen, bis der Betrieb der Sensoranordnung unterbrochen wird. Eine Power-Phase ist gemäß Signal Function Class nicht vorgesehen und aufgrund des geringen Energiebedarfs der Slaves auch nicht erforderlich.

Die oben genannte Power Function Class dient primär der Anbindung von Slaves mit vergleichsweise hohem Energiebedarf und vergleichsweise geringem Datenaufkommen, das von dem Master zum Slave zu senden ist. Im Betrieb einer Sensoranordnung der Power Function Class finden im Wechsel einerseits Phasen der Kommunikation zwischen dem Master und dem Slave im CRM-Modus sowie andererseits Power-Phasen statt. Dabei überwiegen zeitlich üblicherweise die Power-Phasen deutlich. Durch die Speisung der Slaves in diesen Phasen mit vergleichsweise viel Energie bei, verglichen mit dem CRM-Modus, höherer Spannung können insbesondere Aktoren betrieben werden, wobei dies üblicherweise auf Basis von zuvor in der CRM-Phase von dem Master an die Slaves übertragenen Steuerbefehlen erfolgt. Der PDCM-Modus findet gemäß Power Function Class keine Anwendung, da er bei den genannten Aktoren aufgrund des geringen Datenaufkommens auch nicht erforderlich ist.

Im PDCM-Modus folgt die Datenübertragung einem festen, vom Master vorgegebenen Schema. Dabei wird in der Regel jedem Slave ein fester Zeitschlitz zugewiesen, also eine relativ zu einem vom Master ausgesandten Synchronisationssignal vorgegebene Zeitdauer, in der vom jeweiligen Slave Daten an den Master zu übertragen sind.

Heutige auf Ultraschalltechnologie basierende Parkhilfesysteme in Kraftfahrzeugen werden immer mehr in Funktionen eingebunden, die über den klassischen Einparkvorgang hinausgehen. Neben der funktionsübergreifenden Verwendung dieser Sensoren, wie für automatische Bremsvorgänge, spielen die Zuverlässigkeit und die Sicherheitseinstufung im Hinblick auf eine ASIL-Klassifikation (ASIL = "Automotive Safety Integrity Level") einer immer bedeutendere Rolle. Diesbezüglich sei auch verwiesen auf die Norm ISO 26262:2011 "Straßenfahrzeuge - Funktionale Sicherheit", die einen international gültigen Standard im Automotive-Bereich für elektrische und elektronische Systeme von Kraftfahrzeugen darstellt. Die ASIL-Klassifikation ist ein in der zuvor genannten Norm definiertes Risiko-Klassifizierungssystem, bei dem mit Hilfe von drei Parametern für bestimmte Situationen bzw. Gegebenheiten ein ASIL-Level ermittelt werden kann, aus dem sich verschiedene Klassen ableiten lassen, die sich unter anderem auf zulässige Ausfallwahrscheinlichkeiten beziehen:

| | |
|---|---|
| ASIL A: | empfohlene Ausfallwahrscheinlichkeit kleiner 10⁻⁶/Stunde |
| ASIL B: | empfohlene Ausfallwahrscheinlichkeit kleiner 10⁻⁷/Stunde |
| ASIL C: | geforderte Ausfallwahrscheinlichkeit kleiner 10⁻⁷/Stunde |
| ASIL D: | geforderte Ausfallwahrscheinlichkeit kleiner 10⁻⁸ / Stunde |

Mit den ASIL-Levels A, B, C und D sind entsprechende Anforderungen an das jeweilige System verbunden. Für den Fall, dass das Kraftfahrzeug trotz entsprechender Anforderung vom Fahrer nicht beschleunigt, gilt z.B. nur ASIL B, während für Systeme für vollautonomes Fahren in der Regel ASIL D gilt.

Für solche Funktionen und insbesondere auch für Funktionen, die auf künstlichen neuronalen Netzen (ANN - "Artificial Neural Network") basieren, muss eine große Datenmenge zwischen den Sensoren (Slaves) und dem Steuergerät (ECU - "Electronic Control Unit") ausgetauscht werden, das einen Microcontroller und einen als Master fungierenden Interfacebaustein beinhaltet. Das Steuergerät wird vorliegend auch als Zentraleinheit bezeichnet.

Diese erhöhte Kommunikation bedeutet aber auch eine Erhöhung der CPU-Last des Microcontrollers der Zentraleinheit zur Aufrechterhaltung der Datenübertragung. Bei schnellen Interfaces, wie z.B. dem DSI3-Interface für die Kommunikation zwischen der Zentraleinheit und einem zugeordneten Sensor, wie einem Ultraschallsensor eines Parkassistenzystems, gibt standardmäßig der Microcontroller der Zentraleinheit den Startzeitpunkt für einen Befehl an den Sensor bzw. die Sensoren vor. Bei einem einfachen Transceiverbaustein als Interface, dient das Interface lediglich als Pegelwander und setzt jeden Befehl sofort um, indem es den Befehlt quasi in Echtzeit an einen jeweiligen Sensor sendet. Dies hat zur Folge, dass der Microcontroller den Zeitpunkt für die Befehle exakt berechnen und diesen nach genauen zeitlichen Vorgaben an den Transceiver senden muss, was zu einer erheblichen CPU-Last führt.

In der WO 2016/054345 A1 ist ein Ultraschallsystem zum Überwachen des Zustands oder der Integrität einer Struktur, wie z. B. in der Öl-, Gas- oder Energieerzeugungswirtschaft genutzt, beschrieben. Das System umfasst eine Mehrzahl von Ultraschallsensoren und wenigsten ein Digital Sensor Interface.

Die DE 10 2013 226 376 A1 beschreibt ein Verfahren zum Betreiben eines Sensorsystem mit einem Ultraschallsensor und einem Steuergerät, wobei Daten von dem Ultraschallsensor an das Steuergerät strommoduliert und Daten von dem Steuergerät zum Ultraschallsensor spannungsmoduliert übertragen werden. Durch diese Lösung können nach Modifikation einer entsprechenden PSI5-Datenbus-Schnittstelle eben dieser Datenbus und ein LIN-Datenbus zur Datenübertragung zur Ausnutzung der Vorteile der beiden Bussystem miteinander kombiniert werden.

In der DE 10 2012 103 907 A1 ist ein Verfahren zum Betrieb einer Empfangseinheit eines mit einer Sendeeinheit verbundenen Kraftfahrzeugsteuergeräts beschrieben. Die Empfangseinheit fügt dem empfangenen Signal eine Kennung hinzu, welche eine virtuelle Adresse der Sendeeinheit enthält. Dies kann verwendet werden, um eine Sensoreinheit nach dem PSI5-Version1-Standard an ein Kraftfahrzeugsteuergerät anzuschließen, das Signale im PSI-Version2-Standard verarbeitet.

Die EP 2 263 102 B1 beschreibt schließlich ein ultraschallbasiertes Fahrerassistenzsystem mit mehreren Sensoren. Die Sensoren sind jeweils mit einem individuellen Identifikationscode belegt, der über eine Schnittstelle von einem Steuergerät auslesbar ist. Die Schnittstelle ist eine 2-Draht-Bussschnittstelle, die nach einer Periphere Sensor Schnittstelle (Peripheral Sensor Interface PSI) ausgebildet ist.

Die EP 2 455 832 A1 beschreibt einen programmierbaren Mikrokontroller, der an einem Systembus über eine Daisy-Chain angeschlossen ist. Der Mikrokontroller umfass einen Master und mindestens eine Slave-Einheit. Für die Kommunikation nutzt der Master einen speziellen ASIC, der die Befehle an die Slave-Einheiten sendet.

Die US 7,007,107 B1 beschreibt ein Verfahren zur Datenerfassung zwischen einer Zentraleinheit und mehrerer Netzwerkmodule. Für die Kommunikation der Netzwerkmodule werden Zeitfenster definiert, in denen die Netzwerkmodule antworten dürfen.

Es ist die Aufgabe der Erfindung, ein derartiges Verfahren zum Betreiben einer Sensoranordnung in einem Kraftfahrzeug anzugeben, bei dem eine Kommunikation zwischen einer von einem Microcontroller gesteuerten Zentraleinheit und mit der Zentraleinheit verbundenen Sensoren mit einer reduzierten CPU-Last des Microcontrollers unter gleichzeitiger Gewährleistung eines vorbestimmten ASIL-Levels möglich ist.

Diese Aufgabe wird durch die Gegenstände der unabhängigen Patentansprüche gelöst. Bevorzugte Weiterbildungen der Erfindungen sind in den Unteransprüchen beschrieben.

Erfindungsgemäß ist somit ein Verfahren zum Betreiben einer Sensoranordnung in einem Kraftfahrzeug auf Basis eines DSI-Protokolls vorgesehen, wobei
- die Sensoranordnung eine Zentraleinheit und eine Mehrzahl von Sensoreinheiten aufweist,
- die Zentraleinheit einen Microcontroller und einen von dem Microcontroller separaten und mit diesem verbundenen Interfacebaustein aufweist,
- eine Busleitung vorgesehen ist,
- die Sensoreinheiten an die Busleitung angeschlossen sind,
- die Zentraleinheit mittels des Interfacebausteins an die Busleitung angeschlossen ist, und
- über die Busleitung eine Kommunikation zwischen der Zentraleinheit und den Sensoreinheiten erfolgt, wobei
- der Interfacebaustein als Master und die Sensoren als von dem Master gesteuerte Slaves fungieren,
   gekennzeichnet durch folgende Verfahrensschritte:
- Erzeugen eines Befehlssatzes zur Kommunikation des Masters mit den Slaves in dem Mictrocontroller,
- Übertragen des in dem Mictrocontroller erzeugten Befehlssatzes als Ganzem an den Interfacebaustein und,
- Abarbeiten des Befehlssatzes in dem Interfacebaustein durch Kommunikation mit den Sensoren entsprechend dem Befehlssatz, wobei
- der Befehlssatz eine Mehrzahl von an die Sensoren zu sendende Botschaften beinhaltet.

Es ist somit ein maßgeblicher Punkt der Erfindung, dass dem Interfacebaustein ein Befehlssatz mit Botschaften für die Sensoren als Ganzem zur Verfügung gestellt wird, der dann von dem Interfacebaustein selbsttätig abgearbeitet wird. Anders als aus dem Stand der Technik bekannt, werden Botschaften für die Sensoren dem Interfacebaustein also nicht einzeln zur Verfügung gestellt sondern "en bloc".

Wenn es vorliegend heißt, dass es sich um ein Verfahren auf Basis eines DSI-Protokolls handelt, so bedeutet dies, dass das Verfahren das DSI-Protokoll verwendet, nicht aber, dass das Verfahren vollständig dem DSI3-Standard entsprechen muss. Vielmehr kann das Verfahren über den Standard hinausgehen bzw. diesen erweitern.

Erfindungsgemäß ist vorgesehen, dass in dem Befehlssatz wenigstens einem Teil der Botschaften jeweils ein Zeitstempel zugewiesen ist, der angibt, wann die jeweilige Botschaft zu senden ist, und der Interfacebaustein selbst für die Einhaltung des zeitlichen richtigen Sendens der mit einem Zeitstempel versehenen Botschaften an die Sensoren sorgt. Vorzugsweise gilt in diesem Zusammenhang, dass in dem Befehlssatz allen Botschaften jeweils ein Zeitstempel zugewiesen ist. Ganz besonders bevorzugt ist vorgesehen, dass der Befehlssatz jeweils für zwei aufeinanderfolgende, an die Sensoren zu sendende Botschaften einen zeitlichen Abstand definiert. Eine erhebliche Reduktion der CPU-Last kann somit insbesondere auch dadurch erfolgen, dass der Interfacebaustein für die zeitliche Einhaltung der Kommunikation zum Slave Sorge trägt und der Microcontroller dem Interfacebaustein einen kompletten Befehlssatz zur Verfügung stellt.

Vorzugsweise gilt, dass der Interfacebaustein die Abarbeitung des Befehlssatzes unmittelbar nach dessen Erhalt beginnt.

Weiterhin ist vorzugsweise vorgesehen, dass der Microcontroller mit dem Interfacebaustein mittels eines synchronen seriellen Datenbus ("Serial Peripheral Interface" - SPI) verbunden ist. Ein SPI ist Standard bei vielen kommerziell verfügbaren Microcontrollern, so dass dies die Auswahl eines Microcontrollers erleichtert.

Vorteilhaft ist ferner, wenn der Befehlssatz zu seiner Abarbeitung von dem Interfacebaustein in diesem temporär abgespeichert wird.

Schließlich ist gemäß einer bevorzugten Weiterbildung der Erfindung vorgesehen, dass die Erzeugung des Befehlssatzes in dem Microcontroller mit einer Treiber-Software in einer Task-gesteuerten Architektur erfolgt, indem ein Aufruf der Treiber-Software in regelmäßigen zeitlichen Abständen erfolgt.

Erfindungsgemäß ist die Verwendung eines Verfahrens wie zuvor beschrieben in einem Kraftfahrzeug vorgesehen.

Außerdem betrifft die Erfindung auch ein nichtflüchtiges, computerlesbares Speichermedium mit darauf abgespeicherten Befehlen, die bei ihrer Ausführung auf einem Prozessor ein Verfahren wie zuvor beschrieben bewirken.

Die Erfindung betriff auch eine Sensoranordnung, die zum Betrieb mittels eines Verfahrens wie zuvor beschrieben eingerichtet ist. Vorzugsweise weist die Sensoranordnung als Sensoreinheiten Ultraschallsensoreinheiten zum Senden und/oder Empfangen von Ultraschallsignalen auf.

Mit der Erfindung sind eine Mehrzahl von vorteilhaften Wirkungen verbunden:
Der Microcontroller kann kostengünstig ausgewählt werden, da keine besonderen Anforderungen hinsichtlich Sensorkommunikation an diese Hardware gestellt werden. Der Microcontroller kann ein großes Datenpaket am Stück zum als Master agierenden Interfacebaustein senden, wobei dieser das Paket dann für die verwendete DSI3-Schnittstelle nach Vorgaben des Standards aufstückeln kann. Besonders vorteilhaft ist die Erfindung bei Ultraschall-Parkassistenzsystemen, da diese stark kostengetrieben sind oder aber fremdintegriert werden (Bodycontroller), bei denen dann die eigentliche Kommunikation mit den Sensoren wiederum ausgelagert wird und keine besonderen zeitlichen Anforderungen seitens des Bodycontroller für diese Systeme erforderlich sind.

Nachfolgend wird die Erfindung unter Bezugnahme auf die Zeichnungen anhand eines bevorzugten Ausführungsbeispiels näher erläutert. Die dargestellten Merkmale können sowohl jeweils einzeln als auch in Kombination einen Aspekt der Erfindung darstellen.

### Es zeigen

- Fig. 1.: schematisch ein Fahrzeug mit einer Sensoranordnung gemäß einem bevorzugten Ausführungsbeispiel der Erfindung mit einer Zentraleinheit als Master und drei Sensoreinheiten als Slaves in einer "Daisy Chain"-Konfiguration und
- Fig. 2: schematisch die Sensoranordnung gemäß dem bevorzugten Ausführungsbeispiel der Erfindung, wobei die Zentraleinheit mit ihrem Microcontroller und ihrem Interfacebaustein gezeigt ist, und
- Fig. 3: schematisch den Aufbau des Interfacebausteins die Sensoranordnung gemäß dem bevorzugten Ausführungsbeispiel der Erfindung und die Kommunikation des Interfacebausteins mit den Sensoren.

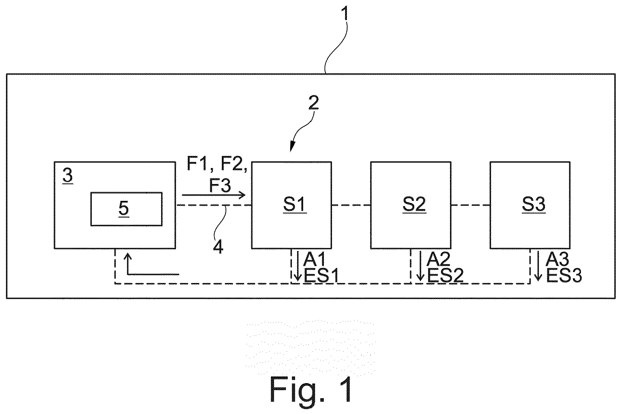

Aus Fig. 1 ist schematisch ein Fahrzeug 1 mit einer Sensoranordnung gemäß einem bevorzugt Ausführungsbeispiel der Erfindung gezeigt. Die Sensoranordnung 2 weist eine Zentraleinheit 3 und drei Sensoreinheiten S1, S2 und S3 auf. Der Master 3 und die Sensoreinheiten S1, S2, S3 sind mittels einer Busleitung 4 miteinander verbunden, die als Zweidrahtleitung ausgebildet ist. Dabei gilt weiterhin, dass die drei Sensoreinheiten S1, S2, S3 mit der Zentraleinheit 3 in Serie miteinander verbunden sind, also in einer sogenannten "Daisy Chain"-Konfiguration.

Die Zentraleinheit 3 stellt im Sinne der oben genannten DSI3-Spezifikation einen Master dar, der über die Busleitung 4 mit den drei im Sinne der DSI3-Spezifikation als Slaves fungierenden Sensoreinheiten S1, S2, S3 verbunden ist, so dass insgesamt ein Bus im Sinne der DSI3-Spezifikation vorliegt. Des Weiteren handelt es sich bei den Sensoreinheiten S1, S2, S3, um Ultraschallsensoreinheiten zum Senden und/oder Empfangen von Ultraschallsignalen, welche Ultraschallsensoreinheiten eines Parkassistenzsystems darstellen.

Eine Kommunikation zwischen der Zentraleinheit 3 und den Sensoreinheiten S1, S2, S3 kann vorliegend in einem CRM-Modus stattfinden, indem, wie aus Fig. 1 ersichtlich, die Zentraleinheit 3 Kommandos F1, F2, F3, wie Fragen, an die Sensoreinheiten S1, S2, S3 sendet die darauf hin mit Antworten A1, A2, A3 antworten, die an die Zentraleinheit 3 gesandt und von dieser empfangen werden.

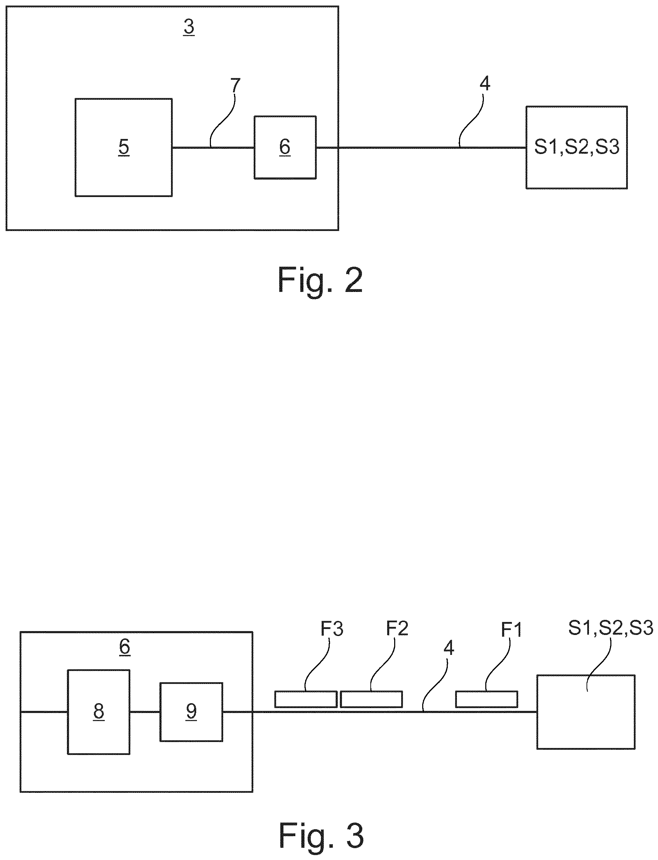

Zum Senden der Kommandos F1, F2, F3, von der Zentraleinheit 3 an die Sensoreinheiten S1, S2, S3, gilt gemäß dem vorliegend beschriebenen bevorzugten Ausführungsbeispiel Folgendes:
Wie aus Fig. 2 ersichtlich, weist die Zentraleinheit 3 einen Microcontroller 5 und einen Interfacebaustein 6 auf, die mittels eines synchronen seriellen Datenbusses 7 (SPI) miteinander verbunden sind. Der Interfacebaustein 6 fungiert als Master und ist über die Busleitung 4, wie in Fig. 2 vereinfacht dargestellt, mit den Sensoren S1, S2, S3 verbunden.

Damit es zum Aussenden von Kommandos F1, F2, F3, von der Zentraleinheit 3 an die Sensoreinheiten S1, S2, S3 kommt, wird gemäß dem vorliegend beschriebenen bevorzugten Ausführungsbeispiel der Erfindung in dem Microcontroller 5 ein Befehlssatz zur Kommunikation mit den Sensoren S1, S2, S3 generiert. Dieser Befehlssatz wird als Ganzes, also "EN bloc" an den Interfacebaustein 6 übertragen. Der Befehlssatz beinhaltet Botschaften, die an die einzelnen Sensoren S1, S2, S3 zu übertragen sind. Darüber hinaus ist jeder Botschaft ein Zeitstempel zugewiesen, der angibt, wann die jeweilige Botschaft an den jeweiligen Sensor S1, S2, S3 zu senden ist. Sobald dieser Befehlssatz von dem Microcontroller 5 an den Interfacebaustein 6 übertragen worden ist, beginnt unmittelbar die Abarbeitung des Befehlssatzes in dem Interfacebaustein 6. Das bedeutet, dass entsprechend den Zeitstempeln, die vorliegend als relative zeitliche Abstände der einzelnen Botschaften zueinander definiert sind, die jeweils vorgegebenen Botschaften an die Sensoren S1, S2, S3 ausgesandt werden.

Insbesondere gilt dabei, dass der Interfacebaustein 6 selbst für die Einhaltung des zeitlichen richtigen Sendens der mit einem Zeitstempel versehenen Botschaften an die Sensoren S1, S2, S3 sorgt. Dies ist schematisch aus Fig. 3 ersichtlich, die zeigt, dass die Botschaft F2 erst nach einem bestimmten zeitlichen Abstand nach der Botschaft F1 ausgesandt wird. Hinsichtlich der Botschaft F3 gilt wiederum, dass diese unmittelbar im Anschluss an die Botschaft F2 ausgesandt wird.

Um den "en bloc" übertragenen Befehlssatz entsprechend abarbeiten zu können, weist der Interfacebaustein 6, wie in Fig. 3 dargestellt, einen Befehlspuffer 8 auf, der einem Treiberbaustein 9 für die Kommunikation mit den Sensoren S1, S2, S3 vorgeschaltet ist. In diesem Befehlspuffer 8 wird der gesamte Befehlssatz abgespeichert und dann unmittelbar nach Erhalt von dem Microcontroller 5 abgearbeitet. Der Befehlssatz wird also für die verwendete DSI3-Schnittstelle nach Vorgabe des Standards aufgestückelt, und, von dem Interfacebaustein 6 verantwortet, zeitlich korrekt an die Sensoren S1, S2, S3 geschickt.

### Bezugszeichenliste

- 1: Kraftfahrzeug
- 2: Sensoranordnung
- 3: Zentraleinheit
- 4: Busleitung
- 5: Microcontroller
- 6: Interfacebaustein
- 7: serieller Datenbus
- 8: Befehlspuffer
- 9: Treiberbaustein
- S1: Sensoreinheit
- S2: Sensoreinheit
- S3: Sensoreinheit

## Patentansprüche

1. Verfahren zum Betreiben einer Sensoranordnung (2) in einem Kraftfahrzeug (1) auf Basis eines DSI-Protokolls, wobei
- die Sensoranordnung (2) eine Zentraleinheit (3) und eine Mehrzahl von Sensoreinheiten (S1, S2, S3) aufweist,
- die Zentraleinheit (3) einen Microcontroller (5) und einen von dem Microcontroller (5) separaten und mit diesem verbundenen Interfacebaustein (6) aufweist,
- eine Busleitung (4) vorgesehen ist,
- die Sensoreinheiten (S1, S2, S3) an die Busleitung (4) angeschlossen sind,
- die Zentraleinheit (3) mittels des Interfacebausteins (6) an die Busleitung (4) angeschlossen ist, und
- über die Busleitung (4) eine Kommunikation zwischen der Zentraleinheit (3) und den Sensoreinheiten (S1, S2, S3) auf Basis des DSI-Protokolls erfolgt, wobei
- der Interfacebaustein (6) als Master und die Sensoren (S1, S2, S3) als von dem Master gesteuerte Slaves fungieren,
umfassend folgende Verfahrensschritte:
- Erzeugen eines Befehlssatzes zur Kommunikation des Masters mit den Slaves in dem Microcontroller (5),
- Übertragen des in dem Microcontroller (5) erzeugten Befehlssatzes als Ganzem an den Interfacebaustein (6) und,
- Abarbeiten des Befehlssatzes in dem Interfacebaustein (6) durch Kommunikation mit den Sensoren (S1, S2, S3) entsprechend dem Befehlssatz, wobei
- der Befehlssatz eine Mehrzahl von an die Sensoren (S1, S2, S3) zu sendende Botschaften beinhaltet,
**dadurch gekennzeichnet, dass** in dem Befehlssatz wenigstens einem Teil der Botschaften jeweils ein Zeitstempel zugewiesen ist, der angibt, wann die jeweilige Botschaft zu senden ist, und der Interfacebaustein (6) selbst für die Einhaltung des zeitlichen richtigen Sendens der mit einem Zeitstempel versehenen Botschaften an die Sensoren (S1, S2, S3) sorgt.

2. Verfahren nach Anspruch 1, **dadurch gekennzeichnet, dass** in dem Befehlssatz allen Botschaften jeweils ein Zeitstempel zugewiesen ist.

3. Verfahren nach Anspruch 1 oder 2, **dadurch gekennzeichnet, dass** der Befehlssatz jeweils für zwei aufeinanderfolgende, an die Sensoren (S1, S2, S3) zu sendende Botschaften einen zeitlichen Abstand definiert.

4. Verfahren nach einem der vorherigen Ansprüche, **dadurch gekennzeichnet, dass** der Interfacebaustein (6) die Abarbeitung des Befehlssatzes unmittelbar nach dessen Erhalt beginnt.

5. Verfahren nach einem der vorherigen Ansprüche, **dadurch gekennzeichnet, dass** der Microcontroller (5) mit dem Interfacebaustein (6) mittels eines synchronen seriellen Datenbus verbunden ist.

6. Verfahren nach einem der vorherigen Ansprüche, **dadurch gekennzeichnet, dass** der Befehlssatz zu seiner Abarbeitung von dem Interfacebaustein (6) in diesem temporär abgespeichert wird.

7. Verfahren nach einem der vorherigen Ansprüche, **dadurch gekennzeichnet, dass** die Erzeugung des Befehlssatzes in dem Microcontroller (5) mit einer Treiber-Software in einer Task-gesteuerten Architektur erfolgt, indem ein Aufruf der Treiber-Software in regelmäßigen zeitlichen Abständen erfolgt.

8. Nichtflüchtiges, computerlesbares Speichermedium mit darauf abgespeicherten Befehlen, die bei ihrer Ausführung auf einem Prozessor ein Verfahren nach einem der Ansprüche 1 bis 7 bewirken.

9. Sensoranordnung, die zum Betrieb mittels eines Verfahrens nach einem der Ansprüche 1 bis 7 eingerichtet ist.

10. Sensoranordnung, nach Anspruch 9, die als Sensoreinheiten (S1, S2, S3) Ultraschallsensoreinheiten zum Senden und/oder Empfangen von Ultraschallsignalen aufweist.

## Claims

1. Method for operating a sensor arrangement (2) in a motor vehicle (1) on the basis of a DSI protocol, wherein
- the sensor arrangement (2) has a central unit (3) and a plurality of sensor units (S1, S2, S3),
- the central unit (3) has a microcontroller (5) and an interface module (6) which is separate from the microcontroller (5) and is connected to the latter,
- a bus line (4) is provided,
- the sensor units (S1, S2, S3) are connected to the bus line (4),
- the central unit (3) is connected to the bus line (4) by means of the interface module (6), and
- communication between the central unit (3) and the sensor units (S1, S2, S3) is carried out via the bus line (4) on the basis of the DSI protocol,
wherein
- the interface module (6) acts as a master and the sensors (S1, S2, S3) act as slaves controlled by the master,
comprising the following method steps:
- generating an instruction set for communication between the master and the slaves in the microcontroller (5),
- transmitting the instruction set generated in the microcontroller (5) as a whole to the interface module (6), and
- executing the instruction set in the interface module (6) by communicating with the sensors (S1, S2, S3) according to the instruction set, wherein
- the instruction set comprises a plurality of messages to be transmitted to the sensors (S1, S2, S3),
**characterized in that** at least some of the messages in the instruction set are each assigned a time stamp which indicates when the respective message is to be transmitted, and the interface module (6) itself ensures compliance with the temporal correct transmission of the messages provided with a time stamp to the sensors (S1, S2, S3).

2. Method according to Claim 1, **characterized in that** all messages in the instruction set are each assigned a time stamp.

3. Method according to Claim 1 or 2, **characterized in that** the instruction set respectively defines an interval of time for two successive messages to be transmitted to the sensors (S1, S2, S3).

4. Method according to one of the preceding claims, **characterized in that** the interface module (6) begins the execution of the instruction set immediately after it has been received.

5. Method according to one of the preceding claims, **characterized in that** the microcontroller (5) is connected to the interface module (6) by means of a synchronous serial data bus.

6. Method according to one of the preceding claims, **characterized in that** the instruction set is temporarily stored in the interface module (6) for its execution by the latter.

7. Method according to one of the preceding claims, **characterized in that** the instruction set is generated in the microcontroller (5) using driver software in a task-controlled architecture by calling the driver software at regular intervals of time.

8. Non-volatile computer-readable storage medium with instructions which are stored on the latter and effect a method according to one of Claims 1 to 7 during their execution on a processor.

9. Sensor arrangement which is designed to operate by means of a method according to one of Claims 1 to 7.

10. Sensor arrangement according to Claim 9, which has, as sensor units (S1, S2, S3), ultrasonic sensor units for transmitting and/or receiving ultrasonic signals.

## Revendications

1. Procédé permettant de faire fonctionner un agencement de capteurs (2) dans un véhicule automobile (1) sur la base d'un protocole DSI, dans lequel
- l'agencement de capteurs (2) présente une unité centrale (3) et une pluralité d'unités de capteur (S1, S2, S3),
- l'unité centrale (3) présente un microcontrôleur (5) et un composant d'interface (6) séparé du microcontrôleur (5) et relié à celui-ci,
- une ligne de bus (4) est prévue,
- les unités de capteur (S1, S2, S3) sont connectées à la ligne de bus (4),
- l'unité centrale (3) est connectée à la ligne de bus (4) au moyen du composant d'interface (6), et
- une communication entre l'unité centrale (3) et les unités de capteur (S1, S2, S3) est effectuée par l'intermédiaire de la ligne de bus (4) sur la base du protocole DSI, dans lequel
- le composant d'interface (6) sert de maître et les capteurs (S1, S2, S3) servent d'esclaves commandés par le maître,
comprenant les étapes de procédé suivantes :
- générer un jeu d'instructions pour la communication du maître avec les esclaves dans le microcontrôleur (5),
- transmettre au composant d'interface (6) le jeu d'instructions généré dans le microcontrôleur (5) dans son ensemble, et
- traiter le jeu d'instructions dans le composant d'interface (6) par une communication avec les capteurs (S1, S2, S3) selon le jeu d'instructions, dans lequel
- le jeu d'instructions contient une pluralité de messages à envoyer aux capteurs (S1, S2, S3), **caractérisé en ce que** dans le jeu d'instructions, respectivement un horodatage est attribué à au moins une partie des messages qui indique quand le message respectif doit être envoyé, et le composant d'interface (6) lui-même assure le respect de l'envoi au moment voulu des messages horodatés aux capteurs (S1, S2, S3).

2. Procédé selon la revendication 1, **caractérisé en ce que** dans le jeu d'instructions, respectivement un horodatage est attribué à tous les messages.

3. Procédé selon la revendication 1 ou 2, **caractérisé en ce que** le jeu d'instructions définit un intervalle de temps respectivement pour deux messages consécutifs à envoyer aux capteurs (S1, S2, S3).

4. Procédé selon l'une quelconque des revendications précédentes, **caractérisé en ce que** le composant d'interface (6) commence le traitement du jeu d'instructions directement après réception de celui-ci.

5. Procédé selon l'une quelconque des revendications précédentes, **caractérisé en ce que** le microcontrôleur (5) est relié au composant d'interface (6) au moyen d'un bus de données série synchrone.

6. Procédé selon l'une quelconque des revendications précédentes, **caractérisé en ce que** le jeu d'instructions est stocké temporairement sur le composant d'interface (6) en vue de son traitement par celui-ci.

7. Procédé selon l'une quelconque des revendications précédentes, **caractérisé en ce que** la génération du jeu d'instructions dans le microcontrôleur (5) est effectuée par un logiciel pilote sous une architecture commandées par des tâches **en ce qu'**un appel du logiciel pilote a lieu à intervalles de temps réguliers.

8. Support de stockage non volatile, lisible par ordinateur, comprenant des instructions stockées sur celui-ci, qui, lorsqu'elles sont exécutées sur un processeur, déclenchent un procédé selon l'une quelconque des revendications 1 à 7.

9. Agencement de capteurs aménagé pour fonctionner au moyen d'un procédé selon l'une quelconque des revendications 1 à 7.

10. Agencement de capteurs selon la revendication 9 qui présente comme unités de capteur (S1, S2, S3) des unités de capteur à ultrasons pour envoyer et/ou recevoir des signaux ultrasonores.
